(19) Europäisches Patentamt
European Patent Office
Office européen des brevets

(11) **EP 2 019 226 B1**

(12) **EUROPÄISCHE PATENTSCHRIFT**

(45) Veröffentlichungstag und Bekanntmachung des Hinweises auf die Patenterteilung:
**23.01.2013 Patentblatt 2013/04**

(51) Int Cl.:
*F16D 13/70* *(2006.01)*          *F16D 13/72* *(2006.01)*
*F16D 25/12* *(2006.01)*          *F16D 25/0638* *(2006.01)*

(21) Anmeldenummer: **08160055.3**

(22) Anmeldetag: **10.07.2008**

(54) **Kopplungsanordnung**

Coupling assembly

Agencement d'accouplement

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.07.2007  DE 102007035243**

(43) Veröffentlichungstag der Anmeldung:
**28.01.2009  Patentblatt 2009/05**

(73) Patentinhaber: **ZF Friedrichshafen AG
88046 Friedrichshafen (DE)**

(72) Erfinder: **Sueck, Gregor
97526, Sennfeld (DE)**

(56) Entgegenhaltungen:
**WO-A1-02/070913          JP-A- 63 067 433
US-A- 4 113 067          US-A1- 2003 230 463
US-A1- 2005 029 072          US-A1- 2006 163 023**

**Beschreibung**

Die Erfindung betrifft eine Kopplungsanordnung gemäß dem Oberbegriff des Anspruches 1.

Aus der US 2005/0029072 A1 ist eine Kopplungsanordnung für ein Kraftfahrzeug bekannt, deren Kupplungsgehäuse erste und zweite Reibelemente einer Reibungskupplung aufnimmt, und mit fluidförmigem Medium durchströmbar ist. Während die ersten Reibelemente an dem Kupplungsgehäuse drehfest aufgenommen sind, stehen die zweiten Reibelemente mit einem Abtriebsorgan in Form eines Innenreibelemententrägers in Drehverbindung. Das Kupplungsgehäuse nimmt weiterhin ein Anpresselement auf, das zur Herstellung einer Reibwechselwirkung zwischen den ersten und zweiten Reibelementen mit denselben in axiale Wirkverbindung bringbar sind, wobei sich die Reibelemente bei Kraftbeaufschlagung durch das Anpresselement an der von demselben abgewandten Seite an einem mit dem Kupplungsgehäuse festen Bauteil abstützen. Während das Anpresselement an seiner den Reibelementen zugewandten Seite über eine Profilierung verfügt, welche über zumindest eine Nutzung mit einer Erstreckungskomponente in Axialrichtung verfügt, sind die zweiten Reibelemente in Reibbelägen jeweils mit einer Nutung ausgebildet, die eine Durchströmung mittels des fluidförmigen Mediums zulassen. Diese Nutungen stehen mit Durchlässen am Innenreibelemententräger sowie mit Durchlässen im Kupplungsgehäuse in Strömungsverbindung. In dem Kupplungsgehäuse enthaltenes Fluid, das auf die radiale Innenseite des Innenreibelemententrägers gespritzt ist, wird fliehkraftbedingt über die Durchlässe im Innenreibelemententräger zu den Nutungen der zweiten Reibelemente geleitet, und gelangt von dort aus über die Durchlässe im Kupplungsgehäuse nach radial außen. Bei Durchströmung der Nutungen durch das Fluid werden die Reibelemente zwar gekühlt, jedoch ist diese Kühlwirkung begrenzt, da das Fluid nach Durchströmung der Nutungen das Kupplungsgehäuse und damit der Erstreckungsbereich der Reibelemente verlässt. Dies wirkt sich insbesondere beim Ein- oder Ausrücken der Reibungskupplung nachteilig aus, weil dann das Anpresselement seine auf die Reibelemente einwirkende Axialkraft auf- oder abbaut, und in diesen Phasen die Reibelemente eine reibungsbehaftete Relativbewegung zueinander ausführen.

Durch die WO 02/070913 A1 ist eine weitere Kopplungsanordnung für ein Kraftfahrzeug bekannt, die ein mit fluidförmigem Medium befülltes Kupplungsgehäuse umfasst. Das Kupplungsgehäuse nimmt einige mit dem Kupplungsgehäuse drehbare erste Reibelemente und einige mit einem Abtriebsorgan drehbare zweite Reibelemente auf, die mittels eines kolbenförmigen Anpresselementes zur Herstellung einer Reibwechselwirkung in Wirkverbindung miteinander bringbar sind, und zusammen eine Reibungskupplung bilden. Wenigstens ein erstes Reibelement und wenigstens ein zweites Reibelement sind mit jeweils einer Fluidförderfläche zur Erzeugung einer die Reibelemente wenigstens bereichsweise umströmenden Fluidzirkulation versehen.

Die ersten Reibelemente werden aufgrund ihrer Verbindung mit dem Kupplungsgehäuse und dadurch mit der Antriebsseite bei Zugbetrieb mit einer höheren Drehzahl betrieben als die zweiten Reibelemente, die mit der Abtriebsseite drehfest sind. Hierdurch wird, in Verbindung den Fluidförderflächen sowie mit denselben zugeordneten axialen Strömungsdurchgängen in den Reibelementen, eine Strömungszirkulation erzeugt, die im Bereich der Reibelemente höherer Drehzahl nach radial außen drängt, dort über die axialen Strömungsdurchgänge mittels eines im wesentlichen axialen Strömungsverlaufs zum benachbarten Reibelement geringerer Drehzahl zu gelangen, um dort aufgrund des Drehzahlunterschiedes wieder nach radial innen gedrängt zu werden, wo es über die Strömungsdurchgänge wieder zurück zum Reibelement höherer Drehzahl strömt. Insofern entstehen im Bereich der Reibungskupplung begrenzte, den Reibelementen nahe kleine Strömungskreise, die zumindest einen Teil der an den Reibelementend aufgenommenen Wärme an einen lamellenfernen größeren Strömungskreis abgeben. Dieser geht von einem als Fluidzuführung dienenden ersten Strömungsraumbereich aus, und mündet in einem als Fluidabführung dienenden zweiten Strömungsraumbereich. Durch Anordnung beider Strömungsraumbereiche jeweils im radial inneren Bereich des Kupplungsgehäuses wird auch der größere Strömungskreis erzwungen.

Auf diese Weise wird eine effiziente Kühlung der Reibelemente der Reibungskupplung erzielt. Allerdings kann bei extremer Beanspruchung, beispielsweise bei länger andauerndem, erheblichen Drehzahlunterschied zwischen den Kupplungselementen die erzielbare Kühlungswirkung noch unzureichend sein.

Der Erfindung liegt die Aufgabe zugrunde, eine Kopplungsvorrichtung derart auszubilden, dass ungeachtet des jeweiligen Betriebszustandes stets eine hinreichende Kühlungswirkung verfügbar ist.

Erfindungsgemäß wird diese Aufgabe durch die Merkmale des Anspruches 1 gelöst.

Hierzu wird ein zumindest zwei Reibelemente einer Reibungskupplung zur Herstellung einer Reibwechselwirkung zwischen den beiden Reibelementen beaufschlagendes Anpresselement an seiner den Reibelementen zugewandten Seite mit einer Profilierung versehen, welche eine Nutung mit einer zumindest im wesentlichen in Radialrichtung verlaufenden Erstreckungsrichtung aufweist. Hierdurch wird folgendes erreicht:

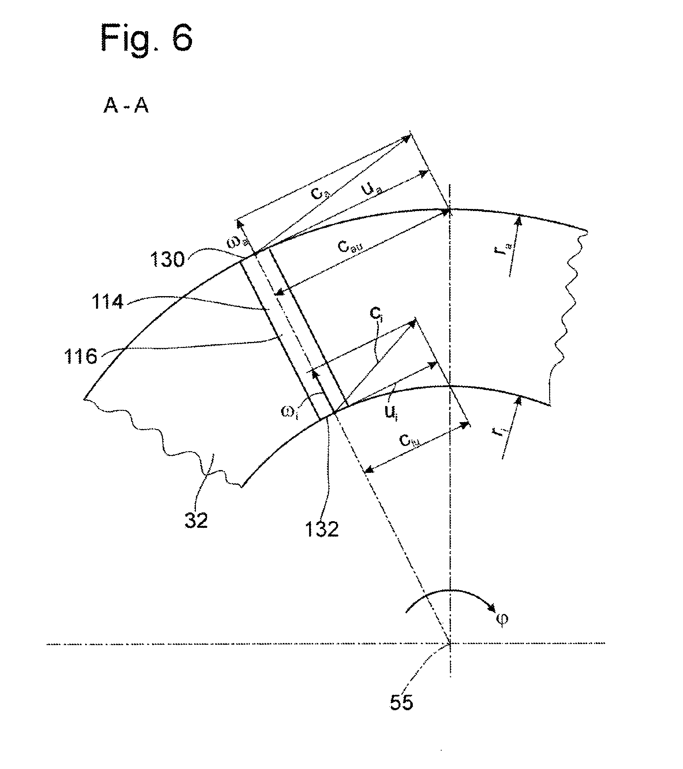

In der Nutung 116 der Profilierung 114 nimmt, wie Fig. 6 erkennen lässt, die tangentiale Strömungsgeschwindigkeit $c_u$ nach radial außen zu, $c_{au}$ ist also höher als $c_{iu}$. Dies nimmt unmittelbar Einfluss auf die Fliehkraft, da folgender Zusammenhang besteht:

$$F_{flieh} = m \times (c_u / r)^2 \times r$$

Aufgrund dieses Zusammenhanges entsteht die Förderung eines Volumenstromes $V_s$, das Anpresselement 32 wirkt also als zusätzliche Pumpe, deren Pumpenmoment Mp sich durch folgende Euler-Gleichung beschreiben lässt:

$$M_p = \rho \times V_s \times (c_{au} \times r_a - c_{iu} \times r_i)$$

Hierbei ist:

$\rho$ : Dichte des fluidförmigen Mediums

$V_s$: Volumenstrom des fluidförmigen Mediums

$c_{au}$: Resultierende Strömungsgeschwindigkeit in Umfangsrichtung am radial äußeren Radius $r_a$ einer Nutung

$c_{iu}$: wie vor, aber an einem radial inneren Radius $r_i$ einer Nutung

Unter Vernachlässigung der konstanten Dichte $\rho$ sind folgende Zusammenhänge herleitbar:

$$1: \quad M_p \sim V_s$$

$$2: \quad M_p \sim (c_{au} \times r_a - c_{iu} \times r_i)$$

$$3: \quad V_s \sim (c_{au} \times r_a - c_{iu} \times r_i)$$

Aus Zusammenhang 3 lässt sich erkennen, dass der Volumenstrom $V_s$ durch zwei Maßnahmen verändert werden kann:

a) durch Änderung der Radiendifferenz zwischen $r_a$ und $r_i$,

b) durch Änderung der tangentialen Geschwindigkeiten $c_{au}$ und $c_{iu}$.

Gemäß Fig. 6 der Zeichnung ist die Profilierung 114 der entsprechenden Fläche des Anpresselementes 32 mit einer im wesentlichen radial verlaufenden Nutung 116 ausgebildet. Das radial äußere Ende 130 der Nutung 116 liegt auf dem radial äußeren Radius $r_a$, das radial innere Ende 132 der Nutung 116 dagegen auf dem radial inneren Radius $r_i$. Wie sich anhand der eingetragenen Vektoren zeigt, ist am radial äußeren Radius $r_a$ sowohl die tangentiale Strömungsgeschwindigkeit $u_a$ als auch die radiale Strömungsgeschwindigkeit $\omega_a$ und, daraus resultierend, auch die Gesamt-Strömungsgeschwindigkeit $c_a$ jeweils größer als die entsprechenden Strömungsgeschwindigkeiten ui, $\omega$ i und ci am radial inneren Radius ri. Die tangentialen Strömungsgeschwindigkeiten $c_a$ oder $c_i$ berechnen sich hierbei aus :

$$c_{a,i} = 2 \times \pi \times n \times r_{a,i}$$

wobei n die Drehzahl der Antriebsseite angibt.

Zusammenfassend wird sich also aufgrund der höheren Strömungsgeschwindigkeit, die sich am radial äußeren Radius ra gegenüber dem radial inneren Radius ri einstellt, eine Sogwirkung ergeben, die eine Beschleunigung des fluidförmigen Mediums am Anpresselement nach radial außen bewirkt. Hierdurch entsteht die erwähnte Pumpwirkung des Anpresselementes 32 nach radial außen. Der sich hierdurch einstellende Volumenstrom $V_s$ wird durch Nutungen 128 des abtriebsseitigen Reibelementes 24 der Reibungskupplung 26 wieder nach radial innen gefördert, um durch die mittels des Anpresselementes 32 ausgeübte Saugwirkung wieder zum Anpresselement 32 zurückgeführt zu werden. Dadurch entsteht bei Betriebszuständen, in denen die abtriebsseitigen Reibelemente 24 mit relativ großem Schlupf gegenüber den antriebsseitigen Reibelementen 22 betrieben werden, eine zusätzliche Zwangsdurchströmung des Kupplungsgehäuses 5 im Bereich der Reibungskupplung 26. Hierdurch wird die ohnehin bestehende Zwangsdurchströmung wirksam unterstützt.

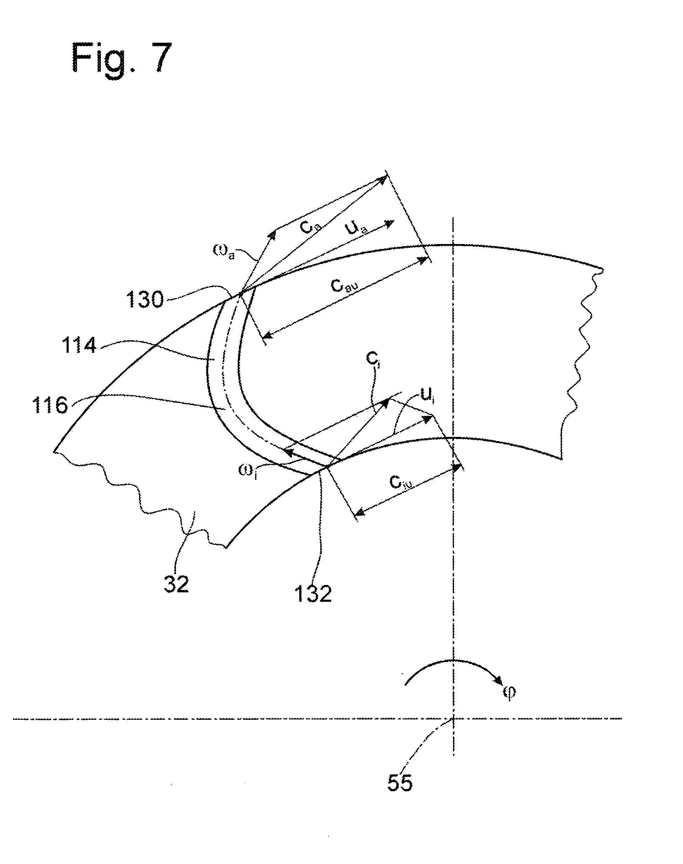

Unter Nutzung der zuvor beschriebenen Zusammenhänge besteht durch Änderung der Geometrie der Nutung 116 die Möglichkeit, Einfluss auf die tangentialen Strömungsgeschwindigkeiten Ca und Ci zu nehmen, und dadurch die durch das Anpresselement 32 erzielbare Pumpwirkung zu verändern. Hierzu gibt Fig. 7 ein Beispiel, indem die Nutung 116 trotz zumindest im wesentlichen radialer Erstreckungsrichtung bogenförmig verläuft. Der Verlauf der Nutung 116 ist hierbei derart gewählt, dass deren radial inneres Ende 132 entgegen der Drehrichtung $\varphi$ ausgerichtet ist, während deren radial äußeres Ende 130 in Drehrichtung $\varphi$ ausgerichtet ist. Aufgrund dieser Ausrichtung der beiden radialen Enden 130, 132 der Nutung 128 sinkt die radial innere tangentiale Strömungsgeschwindigkeit Ci gegenüber dem in Fig. 6 gezeigten, vergleichbaren Wert ab, während die radial äußere tangentiale Strömungsgeschwindigkeit Ca gegenüber dem in Fig. 6 gezeigten, vergleichbaren Wert anwächst. Insgesamt nimmt hierdurch das Gefälle der tangentialen Strömungsgeschwindigkeit zu, und damit auch der durch das Anpresselement 32 erzeugbare Volumenstrom Vs.

Unterstützend zur Profilierung am Anpresselement ist auch an einem zusätzlichen Strömungsleitelement eine solche Profilierung vorgesehen, wobei das Strömungsleitelement zwischen der mit einer Profilierung ausgebildeten Seite des Anpresselementes und den Reibelementen der Reibungskupplung vorgesehen ist. Das Strömungsleitelement kann gemeinsam mit dem Anpresselement einen Strömungskanal begrenzen, der nicht nur fluidförmiges Medium, das von den Reibelementen der Reibungskupplung stammt, zu diesen Reibelementen zurückführt, sondern darüber hinaus auch dem Kupplungsgehäuse frisch zugeführtes fluidförmiges Medium zu den Reibelementen leitet. Mit Vorzug ist daher das Strömungsleitelement mit einer Profilierung versehen, die über zumindest einen ersten Strömungsdurchlass für von einer Fluidquelle geliefertes, frisches fluidförmiges Medium dient, und zumindest einen zweiten Strömungsdurchlass für von den Reibelementen der Reibungskupplung stammendes fluidförmiges Medium.

Mit Vorzug ist die Profilierung des Strömungsleitelementes an dessen dem Anpresselement zugewandter Seite vorgesehen, und vermag so die Profilierung des Anpresselementes zu ergänzen.

Auch beim Strömungsleitelement verfügt die Profilierung über zumindest eine Nutung mit einer zumindest im wesentlichen in Radialrichtung verlaufenden Erstreckungsrichtung, wobei diese Nutung im wesentlichen radial verlaufen kann, oder aber mit Komponenten in Umfangsrichtung insbesondere an ihren radialen Enden.

Die vorliegende Erfindung wird nachfolgend mit Bezug auf die beiliegenden Zeichnungen anhand bevorzugter Ausgestaltungsformen detailliert beschrieben. Es zeigen:

Fig. 1     ein Prinzip-Schaltbild eines Antriebsstranges mit einem Antriebsorgan, einer Kopplungsanordnung und einer Getriebeanordnung die nicht Teil der Erfindung sind;

Fig. 2     eine vergrößerte Herauszeichnung einer in Fig. 1 gezeigten Einzelheit X;

Fig. 3     eine Längsschnittansicht der Kopplungsanordnung,

Fig. 4     eine Herauszeichnung einer Kupplungsvorrichtung der Kopplungsanordnung die nicht Teil der Erfindung ist,

Fig. 5     wie Fig. 4, aber mit anderer konstruktiver erfindungsgemäßer Ausführung,

Fig. 6     eine Draufsicht auf die Kupplungsvorrichtung nach Fig. 4 aus Blickrichtung A zur Darstellung der Geschwindigkeitsverhältnisse bei einer radial verlaufenden Nutung,

Fig. 7     wie Fig. 6, aber mit einer in anderer Weise verlaufenden Nutung.

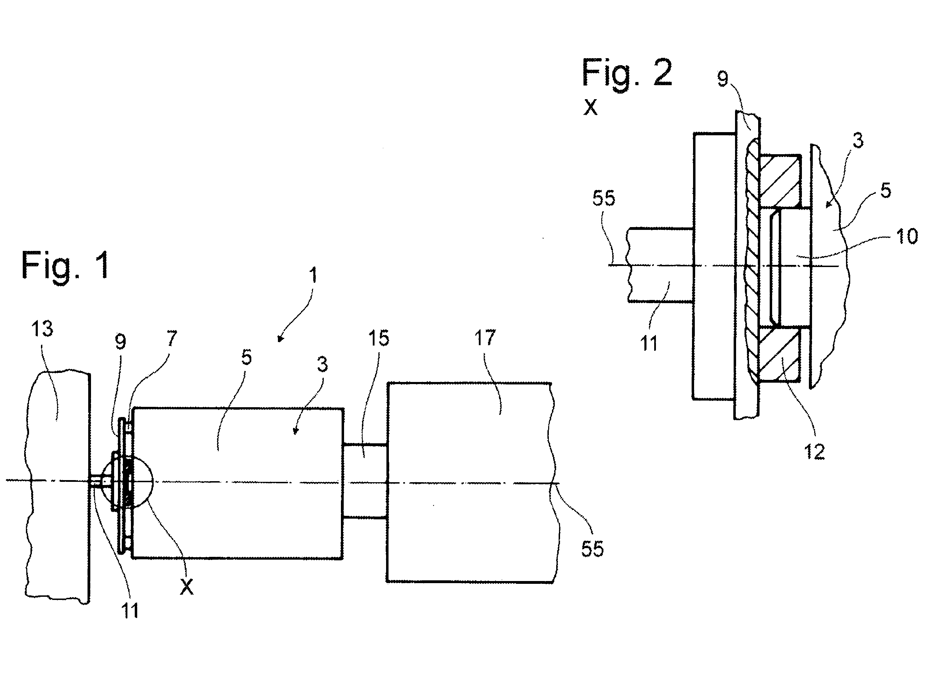

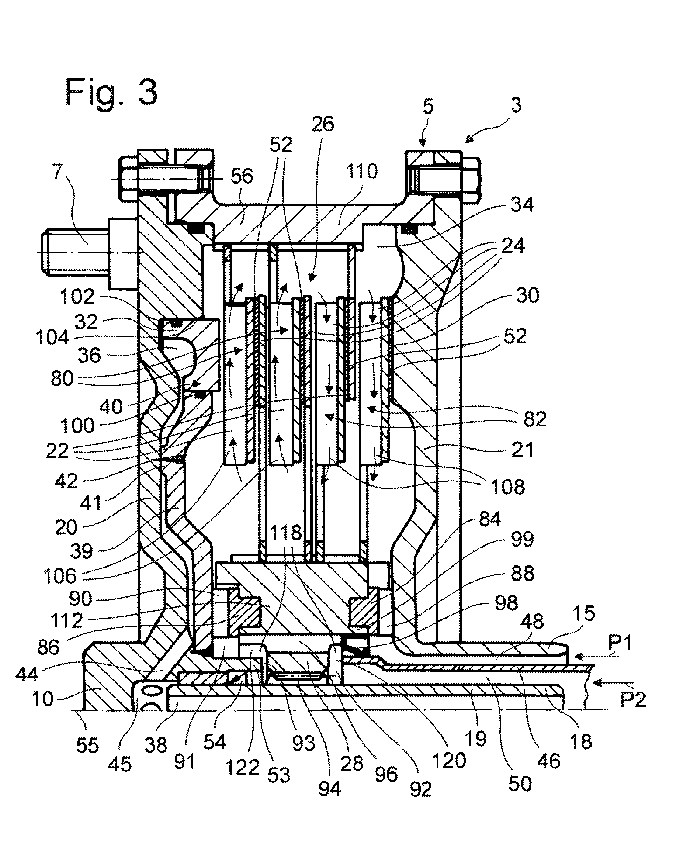

In Fig. 1 ist ein Antriebsstrang 1 mit einer erfindungsgemäßen Kopplungsanordnung 3 schematisch dargestellt. Die Kopplungsanordnung 3 umfasst ein Kupplungsgehäuse 5, das über eine Mehrzahl von Befestigungselementen 7 und ein Kopplungselement 9, wie z.B. eine Flexplatte, mit einer Antriebswelle 11, beispielsweise der Kurbelwelle einer Brennkraftmaschine 13, zur gemeinsamen Drehung gekoppelt werden kann und, wie in Fig. 2 deutlich gezeigt, im Bereich einer Drehachse 55 einen Lagerzapfen 10 aufweist, der in einer an der Abtriebswelle 11 ausgebildeten Zentrierführung 12 aufgenommen ist. An der von der Antriebswelle 11 entfernt liegenden Axialseite weist das Kupplungsgehäuse 5 eine Gehäusenabe 15 auf, die beispielsweise mit einer Getriebeanordnung 17 verbunden ist und dort eine nicht gezeigte Fluidförderpumpe zur Drehung antreibt. Zur Gehäusenabe 15 konzentrisch angeordnet ist ein in Fig. 3 gezeigtes Abtriebsorgan 18, das mit seinem freien Ende in das Kupplungsgehäuse 5 ragt. Dieses Abtriebsorgan 18 kann beispielsweise eine Getriebeeingangswelle 19 sein.

Das Kupplungsgehäuse 5 weist eine sich vom Lagerzapfen 10 aus im Wesentlichen nach radial außen erstreckende antriebsseitige Gehäusewandung 20 und eine sich von der Gehäusenabe 15 aus im Wesentlichen nach radial außen erstreckende abtriebsseitige Gehäusewandung 21 auf. Diese beiden Gehäusewandungen 20, 21 nehmen jeweils im radial äußeren Bereich eine die beiden Gehäusewandungen 20, 21 axial miteinander verbindende Gehäuseaußenschale 56 auf. Das Kupplungsgehäuse 5 umschließt eine mit fluidförmigem Medium befüllte Fluidkammer 34.

In der Fluidkammer 34 des Kupplungsgehäuses 5 ist eine Mehrzahl von ersten Reibelementen 22, welche mit dem Kupplungsgehäuse 5 und hierbei insbesondere mit dessen als antriebsseitiger Reibelemententräger 110 wirksamen Gehäuseaußenschale 56 zur gemeinsamen Drehung gekuppelt sind, sowie eine Mehrzahl von zweiten Reibelementen 24, welche über eine Abtriebsnabe 28 eines abtriebsseitigen Reibelemententrägers 112 mit der Getriebeeingangswelle 19 als Abtriebsorgan 18 zur gemeinsamen Drehung gekoppelt sind, vorgesehen. Die Reibelemente 22, 24 bilden gemeinsam mit den Reibelemententrägern 110, 112 eine Reibungskupplung 26.

Der abtriebsseitige Reibelemententräger 112 stützt sich abtriebsseitig über eine erste Axiallagerung 84 mit Strömungsdurchlässen 88 an der abtriebsseitigen Gehäusewandung 21 und antriebsseitig über eine zweite Axiallagerung 86 mit Strömungsdurchlässen 90 an einem mit der antriebsseitigen Gehäusewandung 20 fest verbundenen Anpresselemententräger 39 ab. Dieser dient gemeinsam mit einem Anpresselement 32, das gemeinsam mit der Reibungskupplung 26 eine Kupplungsvorrichtung 40 bildet, als Trennwand 40 zwischen der Fluidkammer 34 und einer axial durch die antriebsseitige Gehäusewandung 20 und die Trennwand 40 begrenzte Beaufschlagungskammer 36, die über Fluidströmungskanäle 44 und einen Verbindungsraum 45 mit einer Mittenbohrung 38 der Getriebeeingangswelle 19 verbunden ist. Bezüglich des Anpresselemententrägers 39 ist zu ergänzen, dass dieser über entlang des Umfangs verteilte, in Achsrichtung zur antriebsseitigen Gehäusewandung 20 vorspringende Befestigungsvorsprünge 41 verfügt, die an der antriebsseitigen Gehäusewandung 20 vorzugsweise durch Schweißpunkte 42, wie beispielsweise mittels Laserschweißung, befestigt sind. In Umfangsrichtung jeweils zwischen zweien dieser Befestigungsvorsprünge 41, welche für eine feste Distanz des Kupplungskolbenträgers 39 gegenüber der Gehäusewandung 20 sorgen, verbleibt der zur Ausbildung der Beaufschlagungskammer 36 benötigte Raum.

Zurückkommend auf die Axiallagerungen 84, 86, weist die abtriebsseitige Axiallagerung 84 über ihre Strömungsdurchlässe 88 eine Strömungsverbindung mit einem ringförmigen Strömungsraum 48 eines ersten Druckkreises P1 auf, wobei der ringförmige Strömungsraum 48 radial zwischen der Gehäusenabe 15 und einem im Wesentlichen hülsenförmigen Trennelement 46 vorgesehen ist. Radial innerhalb dieses Trennelementes 46 ist, zwischen demselben und der Getriebeeingangswelle 19 verlaufend, ein im Wesentlichen ringförmiger Strömungsraum 50 eines zweiten Druckkreises P2 vorgesehen. Der ringförmige Strömungsraum 50 mündet unmittelbar in abtriebsseitige Radialströmungsdurchlässe 92 des abtriebsseitigen Reibelemententrägers 112, im Gegensatz dazu aber nur mittelbar, nämlich über eine Axialverzahnung 94, durch welche die drehfeste Verbindung der Abtriebsnabe 28 des abtriebsseitigen Reibelemententrägers 112 mit der Getriebeeingangswelle 19 erfolgt, in antriebsseitige Radialströmungsdurchlässe 93 des abtriebsseitigen Reibelemententrägers 112. Die Radialströmungsdurchlässe 92, 93 sind über Axialströmungsdurchlässe 96 im abtriebsseitigen Reibelemententräger 112 miteinander verbunden, die antriebsseitig in eine zu den Strömungsdurchlässen 90 der Axiallagerung 88 führende Verbindungskammer 91 münden, und abtriebsseitig ebenso wie die abtriebsseitigen Radialströmungsdurchlässe 92 durch eine Dichtung 98 begrenzt sind, die radial außen in Kontakt mit einem abtriebsseitigen Axialvorsprung 99 des abtriebsseitigen Reibelemententrägers 112 und/oder der abtriebsseitigen Axiallagerung 84 steht und radial innen in Kontakt mit dem Trennelement 46.

Durch die Dichtung 98 ist der ringförmige Strömungsraum 48 des ersten Druckkreises P1 druckdicht abgetrennt von einem Erstreckungsabschnitt 118 des zweiten Druckkreises P2, bestehend entlang einer ersten Verbindung 120 aus den abtriebsseitigen Radialströmungsdurchlässen 92, den Axialströmungsdurchlässen 96 und der Verbindungskammer 91 und entlang einer zweiten Verbindung 122 aus der Axialverzahnung 94, den Radialströmungsdurchlässen 93 und der Verbindungskammer 91. Der erste Druckkreis P1 ist über die Strömungsdurchlässe 88 der abtriebsseitigen Axiallagerung 84 und der zweite Druckkreis P2 über die Strömungsdurchlässe 90 der antriebsseitigen Axiallagerung 86 an die Fluidkammer 34 angeschlossen.

Ein dritter Druckkreis P3 umfasst die Mittenbohrung 38 der Getriebeeingangswelle 19 und den Verbindungsraum 45 sowie die Fluidströmungskanäle 44 zum Anschluss an die Beaufschlagungskammer 36 für das Anpresselement 32, und bewirkt bei Druckbelastung einen Überdruck in der Beaufschlagungskammer 36 gegenüber der Fluidkammer 34 zum Einrücken der Kupplungsvorrichtung 40 durch axiale Verlagerung des Anpresselementes 32 in Richtung zu den Reibelementen 22, 24 der Reibungskupplung 26. Umgekehrt bewirkt eine Entlastung des Druckkreises P3 einen Überdruck in der Fluidkammer 34 gegenüber der Beaufschlagungskammer 36, und damit eine axiale Verlagerung des Anpressmittels 32 weg von den Reibelementen 22, 24 zum Ausrücken der Kupplungsvorrichtung 40. Der Druckkreis P3 ist durch eine radial zwischen einem abtriebsseitigen Axialvorsprung 53 des Lagerzapfens 10 und der Getriebeeingangswelle 19 vorgesehene Dichtung 54 gegenüber dem Druckkreis P2 isoliert, während er zum Druckkreis P1 nicht über eine Verbindung verfügt. Darüber hinaus ist, zur Abdichtung der Beaufschlagungskammer 36 gegenüber der Fluidkammer 34, das Anpresselement 32 radial innen über eine erste Anpresselementendichtung 100 am Anpresselemententräger 39 und radial außen über eine zweite Anpresselementendichtung 102 an einer Anpresselementenführung 104 der antriebsseitigen Gehäusewandung 20 in Anlage.

Im radialen Erstreckungsbereich des Anpresselementes 32 ist an den von diesem abgewandten Seiten der Reibelemente 22, 24 ein Widerlagerelement 30 an der abtriebsseitigen Gehäusewandung 21 vorgesehen.

Die Versorgung der Fluidkammer 34 mit fluidförmigem Medium kann beispielsweise mittels einer in der Getriebeanordnung vorgesehenen Fluidförderpumpe erfolgen, durch welche das viskose Medium über den ersten Druckkreis P1 in die Fluidkammer 34 eingeleitet wird, in welcher es nach radial außen strömt. Das fluidförmige Medium umströmt die Reibelemente 22, 24 im wesentlichen axial, tritt dann nach radial innen und wird über den zweiten Druckkreis P2 wieder abgezogen. Auf diese Art und Weise kann das, wie im Folgenden noch beschrieben, im Kupplungsgehäuse 5 erwärmte fluidförmige Medium kontinuierlich ausgetauscht und durch kühleres fluidförmiges Medium ersetzt werden.

An zumindest einem Teil der Reibelemente 22, 24 sind Fluidförderflächen 106, 108 ausgebildet, die sich im wesentlichen axial ausdehnen und dadurch bei Rotation um die Drehachse 55 eine Beschleunigung von Fördermedium in der Fluidkammer 34 bewirken. Dabei wirken die Fluidförderflächen 106 der ersten Reibelemente 22, welch mit dem Kupplungsgehäuse 5 zur gemeinsamen Drehung gekoppelt sind, beispielsweise bei einem Einkuppelvorgang, bei welchem die ersten Reibelemente 22 eine deutlich höhere Drehzahl aufweisen als die zweiten Reibelemente 24, als Pumpenschaufelflächen und sorgen an den ersten Reibelementen 22 in deren Funktion als Pumpenelement 80 dafür, dass in ihrem Bereich eine nach radial außen geführte Fluidströmung erzeugt wird. In gleicher Weise wirken die an den zweiten Reibelementen 24 in entsprechender Weise bereitgestellten Fluidförderflächen 108 als Turbinenschaufelflächen und dienen somit zur Bildung eines Turbinenelementes 82. Das letztgenannte ist bei vorhandener Drehzahldifferenz zwischen den ersten Reibelementen 22 und den zweiten Reibelementen 24 für das durch die Fluidförderflächen 106 der ersten Reibelemente 22 in Bewegung gesetzte fluidförmige Medium mittels der Fluidförderflächen 108 als Momentenabstützung wirksam und leitet dabei das fluidförmige Medium nach radial innen, wo es das durch die Fluidförderflächen 106 der ersten Reibelemente 22 von radial innen nach radial außen geförderte fluidförmige Medium ersetzt.

Aufgrund der Rotationsbewegung des Pumpenelementes 80 und des Turbinenelementes 82 entsteht folgender Strömungskreis:

Das durch die Reibelemente 22 des Pumpenelementes 80 jeweils nach radial außen bewegte fluidförmige Medium wird dort in Richtung zum jeweils benachbarten Reibelement 22, 24 axial umgelenkt. Das fluidförmige Medium passiert die Reibelemente 22, 24 axial. Auch das an den Reibelementen 24 des Turbinenelementes 82 jeweils nach radial innen bewegte fluidförmige Medium wird dort in Richtung zum jeweils benachbarten Reibelement 22, 24 umgelenkt, welches vom fluidförmigen Medium ebenfalls axial passiert werden kann.

Es wird somit, wie durch strichlinierte Pfeile in Fig. 3 eingezeichnet, eine Fluidzirkulation aufgebaut, die der Fluidzirkulation entspricht, wie sie durch ein Pumpenrad und ein Turbinenrad eines hydrodynamischen Drehmomentwandlers oder einer Hydrokupplung erzeugt wird.

Die bei der erfindungsgemäßen Kupplungsanordnung 3 erzeugte Fluidzirkulation führt dazu, dass unabhängig von dem angesprochenen Austausch des im Kupplungsgehäuse 5 vorhandenen fluidförmigen Mediums, welcher Fluidaustausch beispielsweise mit einer Rate von 10 l/min erfolgen kann, eine permanente Fluidzirkulation und Umströmung der Reibelemente 22, 24 induziert wird, welche beispielsweise eine Umströmung dieser Reibelemente 22, 24 mit einer Flüssigkeitsmenge von 3000 l/min erzeugen kann. Auf diese Weise kann die im Reib-oder Schlupfbetrieb in den verschiedenen Reibelementen 22, 24 erzeugte Reibwärme vor allem bei diese Reibelemente stark beanspruchenden Anfahrvorgängen gut im fluidförmigen Medium aufgenommen werden. Dieser Fluidzirkulation ist der vergleichsweise langsame Fluidaustausch überlagert, so dass ständig das durch die Zirkulation auf vergleichsweise hohe Temperatur gebrachte fluidförmige Medium zum Teil abgezogen wird und durch kühleres fluidförmiges Medium ersetzt wird.

Es sei darauf hingewiesen, dass selbstverständlich das in Fig. 3 dargestellte Prinzip der Erzeugung einer Fluidzirkulation unabhängig von der Anzahl an ersten Reibelementen bzw. zweiten Reibelementen bereitgestellt werden kann.

Zumindest ein Teil der ersten Reibelemente 22 und zumindest ein Teil der zweiten Reibelemente 24 trägt an wenigstens einer Axialseite jeweils einen Reibbelag 52. Diesen Reibbelägen 52 liegt jeweils ein weiteres Reibelement 22, 24 zur reibmäßigen Wechselwirkung axial gegenüber. Bezüglich des konstruktiven Aufbaus der Reibelemente 22, 24 wird im Einzelnen auf die eingangs erwähnte, bezüglich ihres Offenbarungsgehaltes vollinhaltlich aufzunehmende DE 101 25 628 A1 verwiesen.

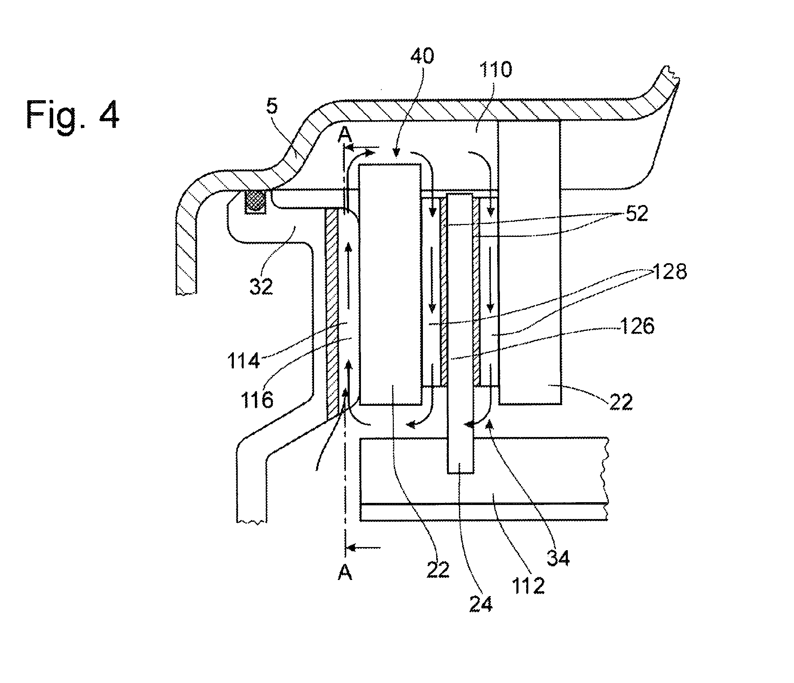

In Fig. 4 ist die Kupplungsvorrichtung 40 vergrößert herausgezeichnet. Abweichend von der Darstellung in Fig. 3 weist das Anpresselement 32 in Fig. 4 eine Profilierung 114 in Form einer Nutung 116 auf, die beispielsweise gemäß der Darstellung in den Fig. 6 oder 7 ausgebildet sein kann, und mit einer zumindest wesentlichen Erstreckungskomponente in Radialrichtung verläuft. Die Fig. 6 oder 7 verdeutlichen die in Fig. 4 angedeutete Blickrichtung A.

Ebenfalls abweichend von der Darstellung in Fig. 3 zeigt Fig. 4 die antriebsseitigen Reibelemente 22 der Reibungskupplung 26 frei von Reibbelägen. Statt dessen ist das abtriebsseitige Reibelement 24 mit einem Belagträger 126 ausgebildet, der axial beidseits mit Reibbelägen 152 bestückt ist. Diese sind an ihrem jeweils vom Belagträger 126 abgewandten Seiten mit Nutungen 128 versehen.

Die durch die Profilierung 114 am Anpresselement 32 hervorgerufene Durchströmung der Kupplungsvorrichtung 40 ist durch Pfeile dargestellt. Wie hierdurch erkennbar ist, wird sowohl frisches fluidförmiges Medium, das von radial innen zugeführt wird, als auch fluidförmiges Medium, das von der Reibungskupplung 26 angesaugt wird, über die Nutung 116 der Profilierung 114 nach radial außen gefördert. Dort wird das viskose Medium am antriebsseitigen Reibelemententräger 110 umgelenkt in eine axiale Strömungsrichtung. Bei Erreichen des zweiten Reibelements 24, das wegen seiner Drehanbindung an den abtriebsseitigen Reibelemententräger 112 mit geringerer Drehgeschwindigkeit um die Drehachse 55 bewegt wird als das erste Reibelement 22, wird das viskose Medium nochmals umgelenkt in radiale Richtung, um durch die Nutungen 128 in den Reibbelägen 52 nach radial innen zu strömen, wo das viskose Medium nach erneuter Umlenkung in axialer Richtung wieder zum Anpresselement 32 zurück gefördert wird.

Der Grund für die Wirkung des Anpresselementes 32 als Pumpe erklärt sich anhand der Fig. 6 wie folgt:

In der Nutung 116 der Profilierung 114 nimmt die tangentiale Strömungsgeschwindigkeit $c_u$ nach radial außen zu, $c_{au}$ ist also höher als $c_{iu}$. Dies nimmt unmittelbar Einfluss auf die Fliehkraft, da folgender Zusammenhang besteht:

$$F_{flieh} = m \times (c_u / r)^2 \times r$$

Aufgrund dieses Zusammenhanges entsteht die Förderung eines Volumenstromes $V_s$ durch das Anpresselement 32, dessen Pumpenmoment Mp sich durch folgende Euler-Gleichung beschreiben lässt:

$$M_P = \rho \times V_s \times ( c_{au} \times r_a - c_{iu} \times r_i )$$

Hierbei ist:

$\rho$ :   Dichte des fluidförmigen Mediums

$V_s$:   Volumenstrom des fluidförmigen Mediums

$c_{au}$:   Resultierende Strömungsgeschwindigkeit in Umfangsrichtung am radial äußeren Radius $r_a$ einer Nutung

$c_{iu}$:   wie vor, aber an einem radial inneren Radius $r_i$ einer Nutung

Unter Vernachlässigung der konstanten Dichte $\rho$ sind folgende Zusammenhänge herleitbar:

$$1: \quad M_P \sim V_s$$

$$2: \quad M_P \sim ( c_{au} \times r_a - c_{iu} \times r_i )$$

$$3: \quad V_s \sim ( c_{au} \times r_a - c_{iu} \times r_i )$$

Aus Zusammenhang 3 lässt sich erkennen, dass der Volumenstrom $V_s$ durch zwei Maßnahmen verändert werden kann:

    c) durch Änderung der Radiendifferenz zwischen $r_a$ und $r_i$,
    d) durch Änderung der tangentialen Geschwindigkeiten $C_{au}$ und $C_{iu}$.

Gemäß Fig. 6 ist die Profilierung 114 der entsprechenden Fläche des Anpresselementes 32 mit einer im wesentlichen radial verlaufenden Nutung 116 ausgebildet. Das radial äußere Ende 130 der Nutung 116 liegt auf dem radial äußeren Radius $r_a$, das radial innere Ende 132 der Nutung 116 dagegen auf dem radial inneren Radius $r_i$. Wie sich anhand der eingetragenen Vektoren zeigt, ist am radial äußeren Radius $r_a$ sowohl die tangentiale Strömungsgeschwindigkeit $u_a$ als auch die radiale Strömungsgeschwindigkeit $\omega_a$ and, daraus resultierend, auch die Gesamt-Strömungsgeschwindigkeit $c_a$ jeweils größer als die entsprechenden Strömungsgeschwindigkeiten $u_i$, $\omega_i$ und $c_i$ am radial inneren Radius $r_i$. Die tangentialen Strömungsgeschwindigkeiten $c_a$ oder $c_i$ berechnen sich hierbei aus :

$$C_{a,i} = 2 \times \pi \times n \times r_{a,i}$$

wobei n die Drehzahl der Antriebsseite angibt.

Zusammenfassend wird sich also aufgrund der höheren Strömungsgeschwindigkeit, die sich am radial äußeren Radius $r_a$ gegenüber dem radial inneren Radius $r_i$ einstellt, eine Sogwirkung ergeben, die eine Beschleunigung des fluidförmigen Mediums am Anpresselement nach radial außen bewirkt. Hierdurch entsteht die erwähnte Pumpwirkung des Anpresselementes 32 nach radial außen. Der sich hierdurch einstellende Volumenstrom $V_s$ wird durch Nutungen 128 des abtriebsseitigen Reibelementes 24 der Reibungskupplung 26 wieder nach radial innen gefördert, um durch die mittels des Anpresselementes 32 ausgeübte Saugwirkung wieder zum Anpresselement 32 zurückgeführt zu werden. Dadurch entsteht bei Betriebszuständen, in denen die abtriebsseitigen Reibelemente 24 mit relativ großem Schlupf gegenüber den antriebsseitigen Reibelementen 22 betrieben werden, eine zustätzliche Zwangsdurchströmung des Kupplungsgehäuses 5 im Bereich der Reibungskupplung 26. Hierdurch wird die ohnehin bestehende Zwangsdurchströmung wirksam unterstützt.

Unter Nutzung der zuvor beschriebenen Zusammenhänge besteht durch Änderung der Geometrie der Nutung 116 die Möglichkeit, Einfluß auf die tangentialen Strömungsgeschwindigkeiten $c_a$ und $c_i$ zu nehmen, und dadurch die durch das Anpresselement 32 erzielbare Pumpwirkung zu verändern. Gemäß Fig. 7 beispielsweise verläuft die Nutung 116 trotz zumindest im wesentlichen radialer Erstreckungsrichtung bogenförmig. Der Verlauf der Nutung 116 ist hierbei derart gewählt, dass deren radial inneres Ende 132 entgegen der Drehrichtung $\varphi$ ausgerichtet ist, deren radial äußeres Ende 130 dagegen in Drehrichtung $\varphi$. Aufgrund dieser Ausrichtung der beiden radialen Enden 130, 132 der Nutung 128 sinkt die radial innere tangentiale Strömungsgeschwindigkeit $c_i$ gegenüber dem in Fig. 6 gezeigten, vergleichbaren Wert ab, während die radial äußere tangentiale Strömungsgeschwindigkeit $c_a$ gegenüber dem in Fig. 6 gezeigten, vergleichbaren Wert anwächst, Insgesamt nimmt hierdurch das Gefälle der tangentialen Strömungsgeschwindigkeit zu, und damit auch der durch das Anpresselement 32 erzeugbare Volumenstrom $V_s$.

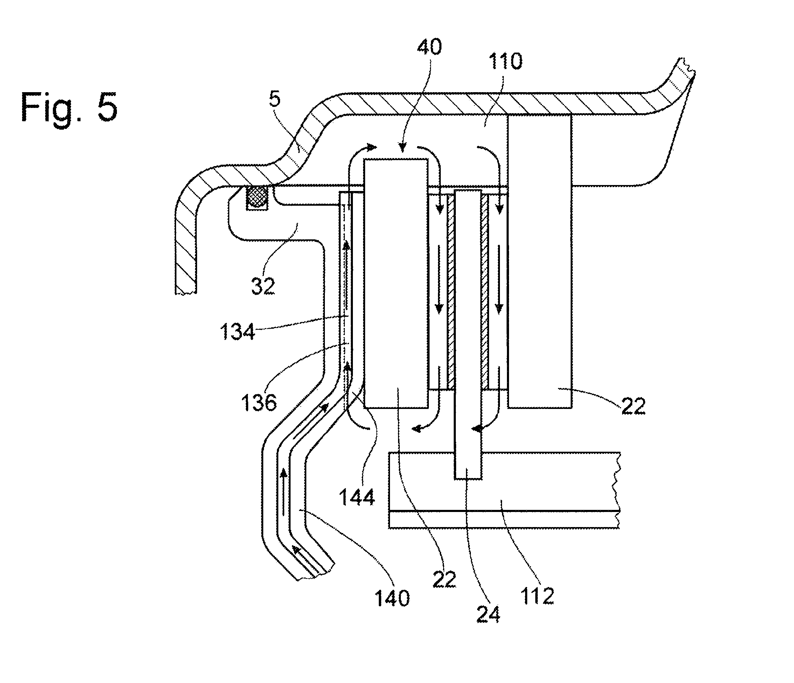

In Fig. 5 ist eine von Fig. 4 abweichende Ausführung dargestellt. Bei dieser Ausführung ist axial zwischen dem Anpresselement 32 und dem benachbarten ersten Reibelement 22 eine Strömungsleitelement 140 vorgesehen, das an seiner dem Anpresselement 32 zugewandten Seite über eine Profilierung 136 durch zumindest eine Nutung 136 aufweist, wobei die Nutung 136 vergleichbar zu der in den Fig. 6 oder 7 gezeigten Nutunge 116 im Anpresselement 32 ausgebildet sein kann, und zusammen mit dem Anpresselement 32 zumindest einen Strömungskanal bildet. Infolge dessen kann auch das Strömungsleitelement 140 als Pumpe zur Erzeugung einer Zwangsströmung wirksam sein, so dass das Strömungsleitelement 140 als Ergänzung der Profilierung 114 am Anpresselement 32 oder als Ersatz für diese Profilierung 114 herangezogen werden kann.

Die Profilierung 134 des Strömungsleitelementes 140 verfügt radial innen über einen ersten Strömungsdurchlass für frisches, von radial innen aus dem Kupplungsgehäuse 5 nachgeliefertes fluidförmiges Medium, sowie, im Radialbereich der Reibelemente 22, 24, über einen zweiten Strömungsdurchlass 144 für von den Reibelementen 22, 24 stammendes fluidförmiges Medium. Das durch beide Strömungsdurchlässe 144 eingetretene fluidförmige Medium vermischt sich in der Profilierung 134, und wird nach radial außen gefördert.

## Bezugsziffernliste

| | |
|---|---|
| 1 | Antriebsstrang |
| 3 | Kopplungsanordnung |
| 5 | Kupplungsgehäuse |
| 7 | Befestigungselemente |
| 9 | Kopplungselement |
| 10 | Lagerzapfen |
| 11 | Abtriebswelle |
| 12 | Zentrierführung |
| 15 | Gehäusenabe |
| 17 | Getriebeanordnung |
| 18 | Antriebsorgan |
| 19 | Getriebeeingangswelle |
| 20, 21 | Gehäusewandung |
| 22 | erste Reibelemente |
| 24 | zweite Reibelemente |
| 26 | Reibungskupplung |
| 30 | Widerlagerelement |
| 32 | Anpresselement |
| 34 | Fluidkammer |
| 36 | Beaufschlagungskammer |
| 38 | Mittenbohrung |
| 39 | Anpresselemententräger |
| 40 | Kupplungsvorrichtung |
| 41 | Befestigungsvorsprünge |
| 42 | Schweißpunkte |
| 44 | Fluidströmungskanäle |
| 45 | Verbindungsraum |
| 46 | Trennelement |
| 48 | ringförmiger Strömungsraum |
| 52 | Reibbeläge |
| 53 | abtriebsseitiger Axialvorsprung |
| 54 | Dichtung |
| 55 | Drehachse |
| 56 | Getriebeaußenschale |
| 84, 86 | Axiallagerung |
| 88, 90 | Strömungsdurchlässe |
| 91 | Verbindungskammer |
| 92, 93 | Radialströmungsdurchlässe |
| 94 | Axialverzahnung |
| 96 | Axialströmungsdurchlässe |
| 98 | Dichtung |
| 99 | abtriebsseitiger Axialvorsprung |
| 106, 108 | Fluidförderflächen |
| 110 | antriebsseitiger Reibelemententräger |
| 112 | abtriebsseitiger Reibelemententräger |
| 114 | Profilierung |
| 116 | Nutung |
| 118 | Erstreckungsabschnitt |
| 120, 122 | Verbindung |
| 126 | Belagträger |
| 128 | Nutungen |
| 130 | äußeres Radialende der Nutung |
| 132 | inneres Radialende der Nutung |
| 134 | Profilierung |
| 136 | Nutung |
| 140 | Strömungsleitelement |
| 144 | Strömungsdurchlass |

## Patentansprüche

1. Kopplungsanordnung für ein Kraftfahrzeug, umfassend ein mit fluidförmigem Medium befülltes Kupplungsgehäuse (5), mindestens ein mit dem Kupplungsgehäuse (5) gemeinsam drehbares erstes Reibelement (22), wenigstens ein mit einem Abtriebsorgan (18) gemeinsam drehbares zweites Reibelement (24), das mittels eines Anpresselementes (32) zur Herstellung einer Reibwechselwirkung in Wirkverbindung mit dem wenigstens einen ersten Reibelement (22) bringbar ist und gemeinsam mit diesem eine Reibungskupplung (26) bildet, wobei wenigstens ein erstes Reibelement (22) und wenigstens ein zweites Reibelement (24) mit jeweils einer Fluidförderfläche (106, 108) zur Erzeugung einer die Reibelemente (22, 24) wenigstens bereichsweise umströmenden Fluidzirkulation ausgebildet ist, wobei das Anpresselement (32) an seiner den Reibelementen (22, 24) der Reibungskupplung (26) zugewandten Seite mit einer Profilierung (114) versehen ist, welche über zumindest eine Nutung (116) mit einer Erstreckungskomponente zumindest im wesentlichen in Radialrichtung aufweist,
   **dadurch gekennzeichnet,**
   **dass** zwischen der mit einer Profilierung (114) ausgebildeten Seite des Anpresselementes (32) und den Reibelementen (22, 24) der Reibungskupplung (26) ein Strömungsleitelement (140) vorgesehen ist, das gemeinsam mit dem Anpresselement (32) einen Strömungskanal begrenzt, wobei das Strömungsleitelement (140) an seiner dem Anpresselement (32) zugewandten Seite mit einer die Profilierung (114) des Anpresselementes (32) ergänzenden Profilierung (134) versehen ist.

2. Kopplungsanordnung nach Anspruch 1,
   **dadurch gekennzeichnet,**

**dass** die Profilierung (134) des Strömungsleitelementes (140) über zumindest einen ersten Strömungsdurchlass für frisches, nachgeliefertes fluidförmiges Medium und über zumindest einen zweiten Strömungsdurchlass (144) für von den Reibelementen (22, 24) der Reibungskupplung (26) stammendem fluidförmigem Medium aufweist.

**3.** Kopplungsanordnung nach Anspruch 1, bei welcher zumindest das Anpresselement (32) über eine zumindest im wesentlichen ringförmige Reibfläche verfügt, die jeweils einen Außenradius (ra) und einen Innenradius (r$_i$) aufweist,
**dadurch gekennzeichnet,**
**dass** sowohl an dem Innenradius (r$_i$) als auch an dem Außenradius (r$_a$) das jeweilige Radialende (130, 132) der Nutung (136) zumindest im wesentlichen jeweils mit radialer Erstreckungsrichtung verläuft.

**4.** Kopplungsanordnung nach Anspruch 1, bei welcher zumindest das Anpresselement (32) über eine zumindest im wesentlichen ringförmige Reibfläche verfügt, die jeweils einen Außenradius (ra) und einen Innenradius (r$_i$) aufweist,
**dadurch gekennzeichnet,**
**dass** sowohl an dem Innenradius (r$_i$) als auch an dem Außenradius (r$_a$) das jeweilige Radialende (130, 132) der Nutung (136) zumindest im wesentlichen jeweils mit einer Erstreckungskomponente in Umfangsrichtung verläuft.

**5.** Kopplungsanordnung nach Anspruch 4,
**dadurch gekennzeichnet,**
**dass** am Innenradius (r$_i$) das jeweilige Radialende (132) der Nutung (136) zumindest im wesentlichen jeweils mit einer Erstreckungskomponente in Umfangsrichtung entgegen der Drehrichtung (φ) des Kupplungsgehäuses (5) verläuft, am Außenradius (ra) dagegen zumindest im wesentlichen jeweils mit einer Erstreckungskomponente in Umfangsrichtung in Drehrichtung (φ).

**Claims**

**1.** Coupling arrangement for a motor vehicle, comprising a clutch housing (5) which is filled with fluidic medium, at least one first friction element (22) which can be rotated together with the clutch housing (5), at least one second friction element (24) which can be rotated together with an output member (18), can be brought into operative connection with the at least one first friction element (22) by means of a pressing element (32) in order to produce a frictional interaction, and forms a friction clutch (26) together with the said at least one friction element (22), at least one first friction element (22) and at least one second friction element (24) being configured with in each case one fluid conveying face (106, 108) in order to produce a fluid circulation which flows around the friction elements (22, 24) at least in regions, the pressing element (32) being provided with a profiling (114) on its side which faces the friction elements (22, 24) of the friction clutch (26), which profiling (114) has at least one groove (116) with an extent component at least substantially in the radial direction, **characterized in that** a flow guiding element (140) is provided between that side of the pressing element (32) which is configured with a profiling (114) and the friction elements (22, 24) of the friction clutch (26), which flow guiding element (140), together with the pressing element (32), delimits a flow channel, the flow guiding element (140) being provided on its side which faces the pressing element (32) with a profiling (134) which complements the profiling (114) of the pressing element (32).

**2.** Coupling arrangement according to Claim 1, **characterized in that** the profiling (134) of the flow guiding element (140) has at least one first flow passage for fresh, re-supplied fluidic medium and at least one second flow passage (144) for fluidic medium which comes from the friction elements (22, 24) of the friction clutch (26).

**3.** Coupling arrangement according to Claim 1, in which at least the pressing element (32) has an at least substantially annular friction face which in each case has an outer radius (r$_a$) and an inner radius (r$_i$), **characterized in that** the respective radial end (130, 132) of the groove (136) runs at least substantially in each case with a radial extent direction both at the inner radius (r$_i$) and at the outer radius (r$_a$) .

**4.** Coupling arrangement according to Claim 1, in which at least the pressing element (32) has an at least substantially annular friction face which in each case has an outer radius (r$_a$) and an inner radius (r$_i$), **characterized in that** the respective radial end (130, 132) of the groove (136) runs at least substantially in each case with an extent component in the circumferential direction both at the inner radius (r$_i$) and at the outer radius (r$_a$) .

**5.** Coupling arrangement according to Claim 4, **characterized in that**, at the inner radius (r$_i$), the respective radial end (132) of the groove (136) runs at least substantially in each case with an extent component in the circumferential direction counter to the rotational direction (φ) of the clutch housing (5) and in contrast, at the outer radius (r$_a$), at least substantially in each case with an extent component in the circumferential direction in the rotational direction (φ).

**Revendications**

1. Agencement d'accouplement pour un véhicule automobile, comprenant un carter d'embrayage (5) rempli d'un agent sous forme fluide, au moins un premier élément de friction (22) pouvant tourner conjointement avec le carter d'embrayage (5), au moins un deuxième élément de friction (24) pouvant tourner conjointement avec un organe d'entraînement en sortie (18), ledit deuxième élément de friction pouvant être amené en liaison active avec l'au moins un premier élément de friction (22) à l'aide d'un élément compresseur (32) en vue de réaliser un effet alternatif de friction et forme avec lui un embrayage à friction (26), au moins un premier élément de friction (22) et au moins un deuxième élément de friction (24) étant réalisés avec respectivement une surface de transport de fluide (106, 108) permettant la circulation de fluide autour d'une partie au moins des éléments de friction (22, 24), l'élément compresseur (32) étant pourvu, au niveau de son côté orienté vers les éléments de friction (22, 24) de l'embrayage à friction (26), d'un profilage (114) comportant au moins une rainure (116) pourvue d'un élément de prolongement s'étendant au moins pour l'essentiel dans la direction radiale, **caractérisé en ce qu'**un élément conducteur de flux (140) est prévu entre le côté de l'élément compresseur (32) pourvu d'un profilage (114) et les éléments de friction (22, 24) de l'embrayage à friction (26), ledit élément conducteur de flux délimitant un canal de flux conjointement avec l'élément compresseur (32), l'élément conducteur de flux (140) étant pourvu, au niveau de son côté orienté vers l'élément compresseur (32), d'un profilage (134) complémentaire au profilage (114) de l'élément compresseur (32).

2. Agencement d'accouplement selon la revendication 1, **caractérisé en ce que** le profilage (134) de l'élément conducteur de flux (140) dispose d'au moins un premier passage de flux pour l'agent sous forme fluide frais amené dans un second temps et d'au moins un deuxième passage de flux (144) pour l'agent sous forme fluide provenant des éléments de friction (22, 24) de l'embrayage à friction (26).

3. Agencement d'accouplement selon la revendication 1, dans lequel au moins l'élément compresseur (32) dispose d'une surface de friction au moins pour l'essentiel de forme annulaire comportant respectivement un rayon extérieur ($r_a$) et un rayon intérieur ($r_i$), **caractérisé en ce que** l'extrémité radiale (130, 132) respective de la rainure (136) s'étend au moins pour l'essentiel respectivement dans la direction d'extension radiale tant au niveau du rayon intérieur ($r_i$) que du rayon extérieur ($r_a$).

4. Agencement d'accouplement selon la revendication 1, dans lequel au moins l'élément compresseur (32) dispose d'une surface de friction au moins pour l'essentiel de forme annulaire comportant respectivement un rayon extérieur ($r_a$) et un rayon intérieur ($r_i$), **caractérisé en ce que** l'extrémité radiale (130, 132) respective de la rainure (136) s'étend au moins pour l'essentiel respectivement avec un élément d'extension dans la direction circonférentielle tant au niveau du rayon intérieur ($r_i$) qu'au niveau du rayon extérieur ($r_a$).

5. Agencement d'accouplement selon la revendication 4, **caractérisé en ce que** l'extrémité radiale (132) respective de la rainure (136) s'étend au moins pour l'essentiel respectivement avec un élément d'extension dans la direction circonférentielle dans le sens contraire du sens de rotation ($\varphi$) du carter d'embrayage (5) au niveau du rayon intérieur ($r_i$), tout en s'étendant au moins pour l'essentiel respectivement avec un élément d'extension dans la direction circonférentielle dans le sens de rotation ($\varphi$) au niveau du rayon extérieur ($r_a$) .

Fig. 1

Fig. 2

# Fig. 3

Fig. 4

EP 2 019 226 B1

# Fig. 5

EP 2 019 226 B1

# Fig. 6

A - A

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050029072 A1
- WO 02070913 A1

- DE 10125628 A1